# EUROPEAN PATENT APPLICATION

(11) **EP 1 947 569 A1**
(43) Date of publication of application: **23.07.2008**
(21) Application number: 07100897.3
(22) Date of filing: 22.01.2007
(51) Int. Cl.: G06F 11/36, G06F 9/46

(54) **A method and system for allocating memory spaces for trace data during debugging of a computer program**

(71) Applicant: ZealCore Embedded Solutions AB, 722 15 Västerås (SE)
(72) Inventor: Thane, Henrik, 723 35, Västerås (SE)
(74) Representative: Reyier, Ann-Mari

(57) **Abstract**

The invention relates to a method for allocating at least a first and a second memory space in a computer system. The memory spaces are adapted to store information about the execution of at least one computer process. The invention also relates to a computer program, a computer readable medium, and an electronic device.

## Description

### FIELD OF THE INVENTION

The present invention relates to a method for allocating at least a first and a second memory space in a computer. The memory spaces are adapted to store different processing information about the execution of at least one computer process, wherein the different memory spaces are intended to store different processing information. The invention also relates to a computer program, a computer readable medium, and an electronic device.

### PRIOR ART

When debugging a computer program the program is usually executed until it crashes due to an error. The program is then rewritten and re-executed until the error is found and may be corrected. In real-time systems several concurrent computer processes, which are dependent on each other, are usually executed on several co-operating processors, and the system may also receive input signals from an external environment. Hence, it is no longer possible to simply re-execute the program, since the execution is dependent on the ever changing environment and may also be dependent on the order in which the processes are executed, which may differ between executions. Any errors are hence dependent on each particular execution, and may therefore not be recreated for testing.

In patent document SE 524799, it is shown to store information about the execution of processes, so that the execution of the processes may be recreated. Hence, it is possible to replay an execution in which an error occurred from stored values, so that the cause of the error can be found and corrected. One problem with this method is that the method consumes a lot of memory for storing information about the execution of the processes.

### SUMMARY OF THE INVENTION

One object of the present invention is to decrease and improve the usage of memory when storing information about the execution of at least one computer process. According to a first aspect this is achieved with the method according to claim 1, according to a second aspect this object is achieved with a computer program according to claim 16, according to a third aspect this object is achieved with a computer readable medium according to claim 17, and according to a fourth aspect this object is achieved with an electronic device according to claim 18.

The invention comprises test-executing at least one computer process, estimating the memory need for the different information about the execution of the at least one computer process based on the result of the test-execution, and allocating at least a first and a second memory space, each adapted to store different information, based on the estimated memory need. By allocating the memory spaces based on the estimated memory need, the memory spaces may be allocated with different sizes depending on the amount and type of information to be stored in each memory space. Hence, no, or only very small amounts of, unnecessary memory is allocated to each respective memory space. Furthermore, the memory need may be assessed and the memory spaces allocated in such a way that the information about the execution stored in the memory spaces cover a larger part of the execution of the processes. This increases the probability that the stored information in the memory spaces will be meaningful.

Furthermore, the test-execution may reveal bottle-necks in the execution of the processes, in the storage of information about the execution of the processes, and/or in the communication between computer components or computer processes, wherein the memory spaces may, depending on need, be allocated in a faster or slower computer component, and/or in a computer component having faster or slower communication, depending on whether the fast component is needed for the memory spaces or for some other part of the executed process.

The information about the execution of a process or processes may, for example, comprise input values, values of variables, information on the communication between computer components or between processes, the time of events, such as the times when a process is initiated, ended, interrupted, or resumed, or the time at which communication has taken place. Any other relevant types of information pertaining to the execution of a computer process or processes are also to be considered to be within the scope of the invention. Preferably, the invention comprises allocating the memory spaces with a format adapted for the type of information to be stored in each respective memory space.

The test-execution may be a test-execution carried out before the actual, real usage of a computer program or programs. Alternatively the test-execution may be an integral part of the installation of a program into a computer system. In yet another alternative embodiment, the test-execution is constituted by an actual, real usage of the program, wherein the memory spaces are released and reallocated after some time of use. The memory spaces may also be periodically released and re-allocated within the function of the program for continuous optimization of the memory usage. Of course, any hybrids of the above are also possible.

A computer system usually comprises one or more processors and one or more computer memories, along with other known computer components. A computer memory may comprise internal memory or external memory. The memory may be a swift access memory, such as a RAM, a storage memory, such as a hard disk, or any other type of computer memory. When allocating a memory space a part of the computer memory is claimed to constitute a memory space with a specific purpose, size and format. The memory space may then only be used for its particular function until the claimed memory space is released. If some part of the memory in the allocated memory space is not used, that part will be a waste until the space is released. The memory need is thus the part of the memory space that will be used, so that a memory space is neither to large nor to small.

A computer process is constituted of a series or group of operations performed on a processor. Usually a computer process is initiated when executing a computer program. A computer program may however, be constituted of several computer processes, either run on one processor only, or on two or more processors at the same time.

According to one embodiment of the invention the memory spaces are adapted to store processing information about the executed processes, which information is intended to facilitate behaviour analysis of the execution of the process. By retrieving and analyzing information about the executed process or processes, the system may be optimized, for example concerning the optimum use of computer components and optimized communication between components. Preferably the memory spaces are adapted to store processing information intended to facilitate error analysis of the execution of the process. An error analysis may comprise debugging of a computer program, but may also comprise searching for errors in hardware, such as process equipment or machines. It may also comprise searching for variables with values out of bounds, for example from an erroneous sensor equipment. Preferably, the method also comprises allocating memory spaces adapted to store information about the execution of at least one process in order to facilitate behaviour analysis, error analysis, or debugging of the at least one process.

According to one embodiment the invention comprises awarding memory for the storage of processing information about the execution of the at least one computer process, and allocating the at least first and second memory spaces based on the awarded memory, so that the combined size of the memory spaces are within the bounds of the awarded memory. Preferably the invention also comprising distributing the awarded memory to the memory spaces based on the estimated memory need. Hence the awarded memory will be efficiently utilized for the storage of information.

According to a preferred embodiment the invention comprises estimating the memory need based on the amount of processing information generated during the test execution. Hence a very precise estimation of the memory need is achieved. The estimation is also very easy to make. The estimation may for example be based on the number of times information would have been written to the memory spaces if the test-execution had been a real execution. Preferably the estimation also is based on the average amount of information that would have been written to the memory spaces with each writing.

According to one embodiment the method comprises pre-allocating test memory spaces before the test-execution, which test memory spaces are adapted to emulate the intended at least first and second memory spaces.. Hence, problems with a computer not being able to find an allocated memory space is avoided. Further, the test-execution of the program is not affected by the absence of the memory spaces, so that the same result is obtained during the test-execution for estimating the need for memory, as when executing the process in a subsequent, real situation.

According to one embodiment the invention comprises estimating the memory need for each memory space departing from the number of times information is written to each memory space, respectively. Registering the number of times information is written to a memory space is simple and the memory needed to keep track of this number for each memory space is small. The registering of the number of times information is written is also independent on what type of information is stored in the memory spaces, which is an advantage if the test-execution differs from a subsequent, true execution of the processes. This may be the case if the test-execution is made on a test-system without any real input values. The registering of the number of times a memory space stores information may comprise counting the number of times information is written to the memory spaces. Alternatively the information stored in the memory spaces may be tagged with information on the time when it is written to the memory spaces. It is then possible to determine the number of times information is stored by comparing the different time tags.

Preferably the invention also comprises estimating the memory need departing from an estimation of an average amount of information written to the memory spaces for each writing during a subsequent execution. Preferably the method comprises estimating the memory need departing from an estimation of the average amounts of information written to each individual memory space for each writing. The type of information needed to be stored for each process is usually known, and hence also its size. Hence the memory need may be estimated as the product between the average amount of information written to the memory space for each writing, and the number of times information is written to the memory space. If a memory space is adapted to store information about two different processes the method may also comprise registering the number of times information is written to the memory space for each process. The memory need may then be estimated based on the average amount of information written to the memory space for each process individually.

According to a further embodiment the invention comprises storing information about the test-execution of the processes in the test memory spaces. Thus, the test-execution of the computer processes simulates a subsequent, real execution, since information is written into the memory spaces in the same manner. Thus, the result from the test-execution is not affected by a difference in the handling of the memory spaces.

According to one embodiment the invention comprises estimating the memory need departing from the amount of stored information in each respective memory space. This is a simple method for measuring the memory need, since information on used memory in a memory space is easily accessible. Further, it is not necessary to allocate further variables in order to keep track on the memory need for the information. Hence a good similarity between the test-executed processes and a subsequent real execution of the processes is achieved.

According to a further embodiment the invention comprises allocating at least one circular memory space, wherein the memory space is adapted to over-write the earliest stored information once the memory space is filled. Thus the memory spaces will always contain the latest information about each process. This is advantageous when the execution of a program will continue for a long time, wherein it is difficult to store all information about the processes. Hence it is ensured that the latest information about the processes, which is the part of the information which is the most interesting in case of an error, always is available in the memory spaces. Thus the amount of information needed to be stored can be decreased, as well as the amount of memory needed. Furthermore, the efficiency of the memory usage is increased. Such circular memory spaces are in some instances called circular buffers.

According to one embodiment the invention comprises allocating at least one circular test memory space, and estimating the memory need based on the number of times the test memory space is over-written. In this way the test-execution of the processes for estimating the memory need may be performed during a longer time, even if one of the test memory spaces becomes filled during the test-execution. The longer test period may in some instances give a better estimation of the memory need, so that the method gives a better and more reliable result. In one embodiment the number of times the memory spaces are over-written is stored in a separate variable. In another embodiment the information on the number of turns that information has been written into the circular memory spaces can be stored inside the memory space itself.

According to one further embodiment the invention comprises test-executing a set of processes during a defined period of time. Alternatively the test-execution may be continued until the system is stable. Preferably the time period above is also set so that a stable system is achieved. A stable system means that the amount of information written to the memory spaces per time unit will not change appreciably over time. Alternatively, the set of processes may be test-executed during a period of time which is considered beneficial to cover during a real execution. With this alternative it is simple to estimate an efficient memory distribution of the available memory to each respective memory space.

According to one embodiment the invention comprises test-executing the process or processes until one memory space is filled. It is then simple to calculate the memory need without having to store further variables. Further, if non-circular memory spaces are used, a very good result for the distribution of the available memory to each memory space is obtained, since the test-execution is executed for the longest time possible.

According to one embodiment the invention comprises allocating memory spaces having a memory size proportional to the estimated memory need for the different processing information, respectively. The available memory usually set the limit on the size of the memory spaces. By letting the size of each memory space being proportional to the amount of processing information generated, and which is to be stored in that memory space, the information stored in the memory spaces will cover as large part as possible of the execution of the processes.

According to one embodiment the invention comprises allocating memory spaces with memory sizes based on the estimated memory need, so that the memory spaces are capable of storing information covering a substantially equal time period of the execution of the processes. This is advantageous when storing information about processes in a real-time system. Real-time systems are usually time dependent, and thus it is important to store information for equally long time-periods. By allocating memory spaces being adapted to store information covering a substantially equal time-period of the at least one executed process, the information storage becomes efficient.

According to one embodiment the invention comprises test-executing at least two processes. Preferably the invention comprises test-executing at least two concurrent processes. Two concurrent processes are two processes executed simultaneously on two different processors. Alternatively the invention comprises test-executing at least two dependent processes. Two dependent processes are two processes in which one process is dependent on information communicated from the other process. Preferably the invention comprises test-executing two concurrent and dependent processes. Concurrent and dependent processes are very difficult to analyze since the behaviour may change between different executions. Hence it is advantageous to store information about the execution of the processes in order to be able to analyze the behaviour after the execution, for example in the event of an error. Preferably the invention also comprises allocating memory spaces for storing information about the execution of two concurrent and/or dependent processes. Preferably the method comprises allocating memory spaces adapted to store information about the communication between the processes. Preferably memory spaces are also adapted to store information about the point of times the communication between processes has been performed. Preferably the invention also comprises allocating memory spaces for storing information about the execution of two concurrent and/or dependent processes in order to allow debugging of the processes.

According to one embodiment the invention comprises allocating at least one memory space adapted to store processing information about the execution of one process only. Thus it is simple to control which process belongs to which memory space. Preferably the invention comprises at least two memory spaces, wherein both are adapted to store processing information about the execution of one and the same process. This may be advantageous if different types of information needs to be stored about the same process, wherein the different types of information are stored in different memory spaces.

According to one embodiment the invention comprises allocating at least one memory space adapted to store information about the execution of at least two processes. Such a memory space is advantageous if the processes only requires a small amount of information. Preferably the memory space is adapted to store information about which process the information belongs to.

According to one embodiment the invention comprises allocating memory spaces adapted to store processing information about the execution of at least one process, which processing information allows a re-play of the execution of the at least one process. Storing such information in the memory spaces allows a re-play of a computer process, and/or computer program, in which an error occurred. Preferably the memory spaces comprises information about when a process has been initiated, interrupted, resumed, and terminated. Such information is particularly useful for debugging real-time systems and concurrent systems.

According to one embodiment the invention comprises executing the at least one process after the allocation of the memory spaces. Preferably the invention also comprises storing processing information about the execution of the at least on process in the memory spaces, which processing information allows a subsequent re-play of the execution of the at least one process. Hence a method for storing information about the execution of at least one computer process is achieved.

### DESCRIPTION OF ATTACHED DRAWINGS

The invention is now to be described as a number of non-limiting examples of the invention with reference to the attached drawings.
Fig. 1a-c show a first example of a method according to the invention.
Fig. 2a-c shows a second example of a method according to the invention.
Fig. 3a-c shows a third example of a method according to the invention.
Fig. 4 shows a computer and a computer readable medium with a computer program written thereon according to the invention.

### DETAILED DESCRIPTION

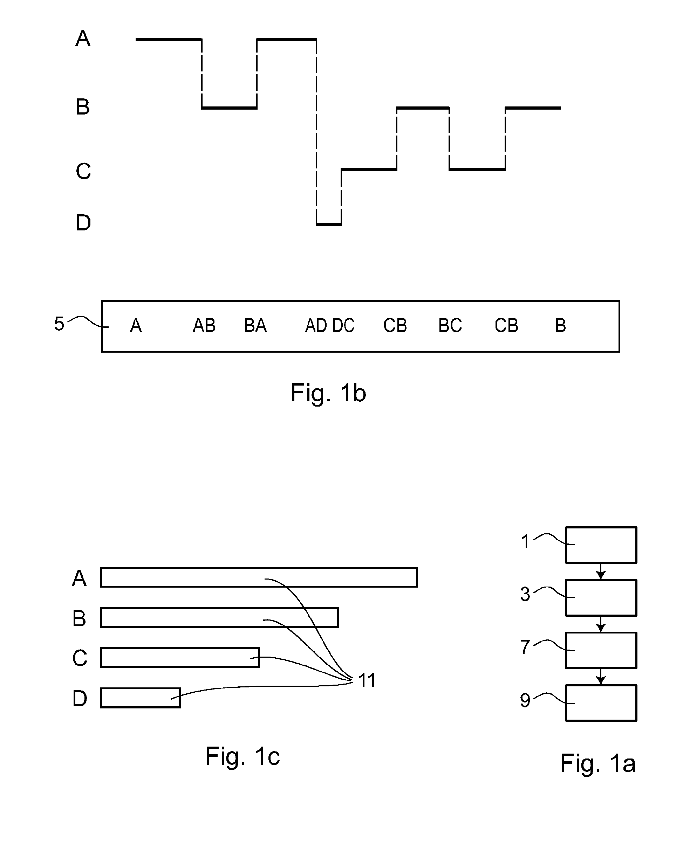

In fig. 1a-c a first example of a method according to the invention is shown. Fig. 1a shows the steps according to one example of the method according to the invention, fig. 1b shows test-execution of computer processes, and fig. 1c shows an example of allocation of memory spaces in accordance with the invention.

In a first step 1 in fig. 1a the method comprises test-executing at least one computer process in a computer system. In this example the method comprises executing four computer processes, denoted with the letters A, B, C, and D, respectively. In this example the processes are dependent on each other and are executed in a single thread characteristic for a one-processor computer.

In another example, if several processors are used, the processors may carry out execution of one thread per process. The threads may then in themselves be dependent on each other. The invention is equally applicable to the case with several parallel processors.

In this example the test-execution of the processes in the first step 1, is performed until the execution of the processes is finished. In another example the test-execution may be performed until a specified criterion is met. This is advantageous if the execution of the processes is not limited in time, for example for an endless control loop.

Fig. 1b illustrates test-execution of the processes, wherein the execution of process A is first initiated, is interrupted by the initiation of process B, and then resumed and terminated. Thereafter process D is executed, after which process C is initiated. Process C is interrupted by the resuming of process B, which is in turn interrupted again by process C. The execution is ended by process C terminating, so that process B is resumed and subsequently terminated.

In a second step 3, since the memory spaces have not been pre-allocated, the method comprises registering each time information would have been written to a memory space if the memory space had been allocated. During the pre-execution information is therefore written to a memory 5, each time information would have been written to a memory space in a subsequent execution. This is illustrated in fig. 1b in that information events are registered in a memory 5, and that each registration is associated with a specific memory space. In fig. 1b this is illustrated by marking each respective memory space, or process letter, in the memory 5. From fig. 1b it is apparent that information about process B is written the greatest number of times, information about process A and C is written equally number of times and information about process D is written the least number of times.

In this case information would have been written to a memory space each time a process is initiated, resumed, interrupted or terminated. Information may also be written about other events, such as internal events as the allocation of variables, variable values, or the like, and communication events, such as communication between processes or computer components.

In a third step 7 the method comprises estimating the memory need based on the result from the test-execution of the computer processes. In this example the memory need is estimated based on the number of times information would have been written to each memory space respectively. The method also comprises estimating the memory need based on an estimation of the average amount of information written to a memory space for each writing. In this example the average amount of information is estimated per memory space, but in another example the average amount of information may be estimated for all memory spaces collectively. In this example the average amount of information for the processes B, C, and D are estimated to be of similar size, while the average amount of information written about process A is estimated to be twice the size, relative to the information amount for the processes B, C, and D.

In a fourth step 9 the method comprises allocating a set of memory spaces, comprising at least a first and a second memory spaces, in this example four memory spaces, based on the estimated memory need. In this example the set of memory spaces are allocated based on the estimated memory need, so that the size of the memory spaces is proportional to their respective estimated memory needs. In this example, the memory need for a memory space is calculated as the product between the information amount for each writing to that memory space times the expected number of writings for that memory space. The memory space allocated to receive information about process A is thus the largest, since the amount of information for each writing of information about process A is twice the amount of information for each writing about the other processes. The memory space for receiving information about process D is the smallest since information has only been written two times about process D. The memory space for B is the next largest, since information has been written to memory space B the greatest number of times. Hence a set of memory spaces are allocated adapted for storing information about processes which are both dependent on each other and are executed in parallel with each other.

The memory spaces 11 are adapted for storing information about a set of executed processes in order to allow subsequent replay of the execution, in case of an error. Thus the method in fig. 1a-c is preferably used with debugging of real-time systems. Furthermore, the memory spaces are adapted for storing information about only one process per memory space.

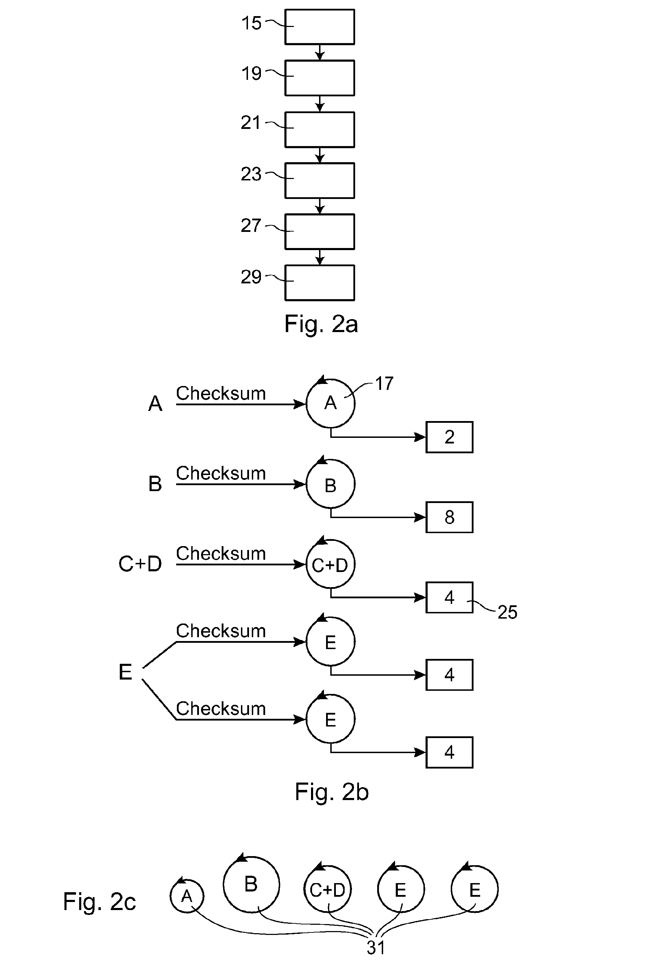

In fig. 2a yet another example of a method according to the invention is shown. In fig. 2b the storage of information about test-executed processes and estimation of the memory need is shown, and in fig. 2c a new set of re-allocated memory spaces are shown.

In a first step 15 the method comprises initial pre-allocating of memory spaces 17 comprising at least a first and a second memory space, before the test-execution of the computer processes. In this example the method comprises pre-allocating five memory spaces. In this example the method comprises allocating circular memory spaces. The circular memory spaces are adapted to over-write the earliest stored information with any new information once the circular memory space is filled. The memory spaces are thus circular in that the information in the memory spaces is continuously over-written by new information. This is illustrated in the figure in that the memory spaces are shaped as circles with arrows showing how information is written into the spaces. Circular memory spaces allow the latest generated information to be stored in the memory, which is advantageous if the execution is long, or endless, wherein it is virtually impossible to store all information about the execution. Hence the latest, and probably the most pertinent, information is always available for use.

In this example the method comprises pre-allocating two memory spaces, marked with A and B respectively in fig. 2b, each of which is adapted to store information about the execution of only one process per memory space. In this example the memory space marked A is adapted to store information only about the execution of process A, and the memory space marked B is adapted to store information only about the execution of process B.

The method further comprises pre-allocating at least one memory space, marked C+D in fig. 2b, which is adapted to store information about at least two different processes. In this example the memory space is adapted to store information about both process C and D. This is advantageous if the two processes do not need any large amount of information in order to be properly re-played.

The method further comprises pre-allocating at least two memory spaces adapted to store information about one and the same computer process E. This is advantageous if the process E demand a large amount of information, or information of different types, in order to be successfully re-executed. These memory spaces are both marked with E in fig. 2b.

In a second step 19 the method comprises test-executing a set of computer processes comprising at least a first and a second process. In this example the method comprises executing five computer processes, denoted with the letters A, B, C, D, and E in fig. 2b. The processes A, B, C, D, and E are further both concurrent, hence executed simultaneously on five different processors, and dependent, that is are depending on communication between the processes.

In this example the processes are executed for a fixed time period. In this example the set of processes are executed until the execution of the processes becomes stable, that is until the proportions between the rate of information about the execution stored in the different memory spaces no longer changes appreciably. This is advantageous if, for example, a computer program executes processes differently in the beginning of the program in comparison with when the program has reached for example a main loop. Alternatively, the set of processes may instead be executed during a period of time expected to be interesting when performing any error analysis of the program. This is advantageous if the execution never reaches a stable state.

In a third step 21 the method comprises storing information about the executed processes in the memory spaces. In this example the memory spaces are adapted to store information about at least one process in the form of adresses, values for variables, or the like. In this example the method comprises storing a check sum comprising the sum of the values of the information. In this example the method comprises storing a check sum obtained from summing together the stack belonging to the processor performing the execution. The memory spaces 17 are further adapted to store information about the processes in order to allow subsequent re-execution of the processes. Since the latest information about the execution is stored in the circular memory spaces, the time up to an error may be simulated in order to gain information about the execution, for example about the cause of an error.

In a fourth step 23 the method comprises registering the number of times the memory spaces 17 are completely over-written. The method thus comprises allocating five variables 15 adapted to receive a numerical value which is initially at zero and then increased with 1 each time a memory space 17 has been fully over-written. For example, the variables 25 may be incremented with 1 each time a memory space over-writes a specific memory cell in the memory space. The variables will hence function as revolution counters for the memory spaces, and will function as indicators of how much information has been written to a memory storage during the execution. In this example it is shown that the memory space A, has been over-written two times, the memory space B eight times, and the memory spaces C + D, and the two E-memories, four times each.

In a fifth step 27 the method comprises estimating the memory need for the information based on the result of the execution. In this example the method comprises estimating the memory need for the information based on the amount of stored information in the memory spaces. In this example the method hence comprises estimating the memory need based on the number of times the memory spaces have been over-written during the pre-execution. Thus the memory need will be proportional to the value of the variables 25. In an alternative embodiment it is possible to estimate the memory need based on time tags associated with the stored information. The variables may in this case be omitted, which is advantageous if the variables per se disturb the execution since the variable will not be present in a subsequent, real execution.

In a sixth step 29 the method comprises allocating a set of memory spaces 31, which are shown in fig. 2c, based on the estimated memory need. The re-allocated memory spaces 31 will thus in a subsequent execution of the processes, be the memory spaces 31 used for storing information about the processes. In this example the set of memory spaces 31 are allocated so that the size of the memory spaces are proportional to their respective estimated memory need. Thus the memory need for the memory space storing information about process A is half the size of the memory spaces storing information about the processes C, D, and E, while the memory space storing information about process B is twice the size of the memory spaces storing information about the processes C, D and E.

In this example the set of memory spaces 31 is allocated based on the estimated memory need, in this example based on said variables 25, so that the memory spaces have a memory size such that at least a major part of the memory spaces becomes filled with information after a substantially equal time period of the execution of the processes. In for example a real time computer system the behaviour analysis must be performed for the same time period. Since the analysis needs information from all processes, the analysis may only be performed for a time period covered by the information in all memory spaces. Hence if one memory space covers a longer time-period, that extra information will be of no use.

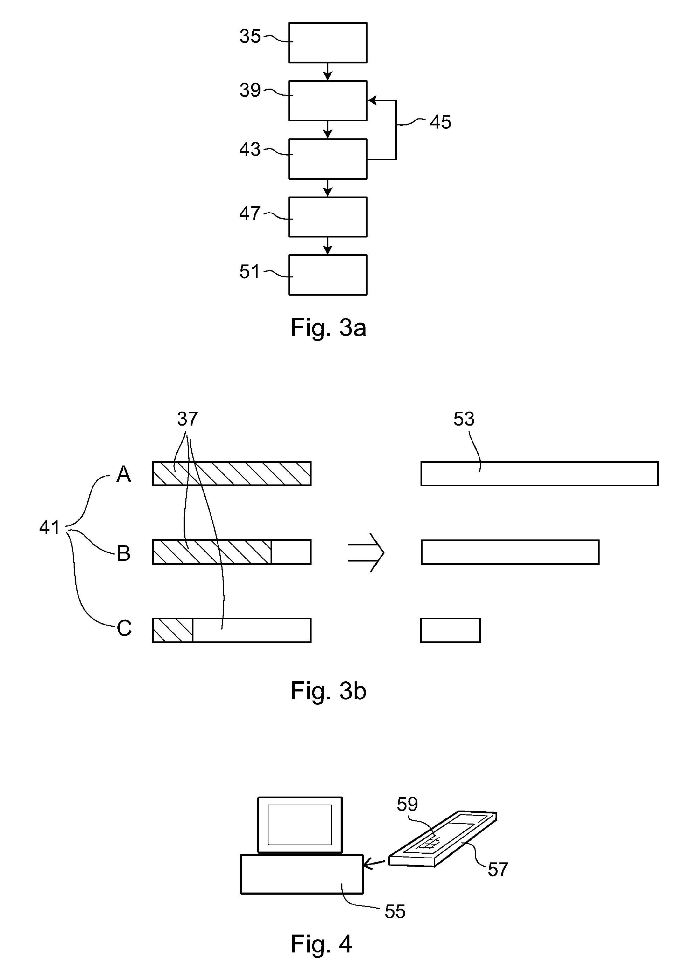

In fig 3a a further example of a method according to the invention is shown. In a first step 35 the method according to the invention comprises an initial test-allocation of a set of memory spaces 37, which are shown in fig. 3b, before a test-execution of a set of computer processes. In a second step 39 the set of computer processes 41 are test-executed. In a third step 43 the method comprises storing information about the test-executed processes in the memory spaces 37. The processes 41 are test-executed until one of the memory spaces 37 is filled. In this example the memory space for process A illustrates the first memory space to be filled. The dashed areas in the memory spaces 37 represents stored information, while the white areas represents empty memory. Hence the memory spaces for process B and C are not entirely filled, but contain empty memory.

In a fourth step 47 the method comprises estimating the memory need for the information based on the result of the execution. In this example the memory need is estimated based on the amount of stored information in the memory spaces 37. In this example it is therefore estimated that the memory need is greatest for the memory space for process A, while the memory need for the memory space for process C is the least.

In a fifth step 49 the method comprises allocating a new set of memory spaces 53 based on the estimated memory need. Thus a memory space for process A is allocated, which is larger than the memory spaces for processes B and C. In this example the set of memory spaces 53 is allocated based on the estimated memory need so that the sizes of the memory spaces 53 are proportional to their respective estimated memory need. Furthermore, the memory spaces are allocated so that the main part of the memory spaces will be filled with information about the processes after a substantially equal time period, during a following execution of the processes.

In fig. 4 a computer system comprising an electronic device in the form of a computer 55 is shown, which is adapted to perform, or induce the computer system to perform, singularly or in combination with the electronic device 55, the method according to the invention. In this example the electronic device 55 is considered to constitute the computer system, wherein a program to be analyzed is run on the electronic device, and the electronic device is adapted to perform the method according to the invention by itself.

In another example the electronic device may be a part of the computer system, wherein the program, or processes, to be analyzed are run on other parts of the computer system. The electronic device is then adapted to communicate with these other parts about the execution of the processes in order to perform, and induce the performance of, the method according to the invention. In this case the electronic device is adapted to induce the computer system to perform part of the method, and the method will hence be performed in whole by the combination of the electronic device and the computer system.

In fig. 4 a computer readable medium 57 is also shown, having a computer program 59 written thereon. The computer program 59 is directly downloadable into the internal memory of the computer 55 and is adapted to induce the computer to perform any of the method steps described above, when executed on the computer 55.

The invention is only explained as a number of non-limited examples of the invention for the purpose of illustration only. The invention may be varied freely within the framework of the following claims. For example, the methods described in connection with the figures may be combined with each other, and method steps described may be omitted, substituted, modified, added or performed in a different order. For example, it is not necessary to perform the method before an execution of a real-time program, but the method can be used while a real-time program is running. The method may then comprise continuous measuring, and estimating of the memory need, and reallocating of the memory spaces without terminating the program. The method may also be performed on a part of a program and not necessarily on the entire program. Furthermore, the methods for estimating the memory need are only given as preferred examples, and there may be other methods for estimating the memory need which are equally applicable.

## Claims

1. A method for allocating at least a first and a second memory space in a computer system, the memory spaces being adapted to store processing information about the execution of at least one computer process, wherein the different memory spaces are intended to store different processing information, **characterized in that** the method comprises
- test-executing the at least one computer process,
- estimating the memory need for the different processing information about the execution of the at least one computer process based on the result of the test-execution, and
- allocating the at least first and second memory spaces based on the estimated memory need for the different processing information.

2. A method according to claim 1, **characterized in that** the memory spaces are adapted to store processing information intended to facilitate behaviour analysis of the execution of the process.

3. A method according to claim 2, **characterized in that** the memory spaces are adapted to store processing information intended to facilitate error analysis of the execution of the process.

4. A method according to claim 1, 2 or 3, **characterized in that** the method comprises
- awarding memory for the storage of processing information about the execution of the at least one computer process, and
- allocating the memory spaces based on the awarded memory, so that the size of the combined memory spaces are within the bounds of the awarded memory.

5. A method according to any of the previous claims, **characterized in that** the method comprises estimating the memory need based on the amount of processing information generated during the test execution.

6. A method according to any of the previous claims, **characterized in that** the method comprises
- pre-allocating test memory spaces before the test-execution, which test memory spaces are adapted to emulate the intended at least first and second memory spaces.

7. A method according to claim 6, **characterized in that** the method comprises
- storing information in the test memory spaces during the test execution.

8. A method according to any of the previous claims, **characterized in that** the method comprises
- allocating at least one circular memory space, wherein the memory space is adapted to over-write the earliest stored information once the memory space is filled.

9. A method according to claim 8, **characterized in that** the method comprises
- allocating at least one circular test memory space, and
- estimating the memory need based on the number of times the test memory space is over-written.

10. A method according to any of the previous claims, **characterized in that** the method comprises
- allocating memory spaces having a memory size proportional to the estimated memory need for the different processing information.

11. A method according to claim 10, **characterized in that** the method comprises
- allocating a set of memory spaces adapted to store information covering a substantially equal time period of the at least one executed process.

12. A method according to any of the previous claims, **characterized in that** the method comprises
- test-executing at least two concurrent processes, and
- allocating memory spaces adapted to store processing information about the execution of the at least two concurrent processes.

13. A method according to any of the previous claims, **characterized in that** the method comprises
- test-executing at least two dependent processes, and
- allocating memory spaces adapted to store processing information about the execution of the at least two dependent processes.

14. A method according to any of the previous claims, **characterized in that** the method comprises
- allocating memory spaces adapted to store processing information about the execution of at least one process, which processing information allows a re-play of the execution of the at least one process.

15. A method according claim 14, **characterized in that** the method comprises
- executing the at least one process after the allocation of the memory spaces, and
- storing processing information about the execution of the at least on process in the memory spaces, which processing information allows a subsequent re-play of the execution of the at least one process.

16. A computer program directly downloadable into the internal memory of a computer system, **characterized in that** the computer program comprises software adapted to induce the computer system to perform the method according to claim 1.

17. A computer readable medium having a computer program written thereon, which computer program is directly downloadable into the internal memory of a computer system, **characterized in that** the computer program is adapted to induce the computer to perform the method according to claim 1, when executed in the computer system.

18. An electronic device adapted for communication with a computer system, **characterized in that** the electronic device is adapted to perform, and/or to induce the computer system to perform, either by itself or in combination with the electronic device, the method according to claim 1.
